# EUROPÄISCHE PATENTSCHRIFT

(11) **EP 0 762 165 B1**
(45) Veröffentlichungstag und Bekanntmachung des Hinweises auf die Patenterteilung: **06.05.2004**
(21) Anmeldenummer: 96113486.3
(22) Anmeldetag: 22.08.1996
(51) Int. Cl.: G02B 6/38, H01R 13/514

(54) **Hybrider Steckverbinder mit modularen elektrischen und Lichtwellenleiter-Steckverbindungen**
Hybrid connector with modular electrical and optical conductor connections
Connecteur hybride avec des connexions de conducteurs électriques et optiques

(30) Priorität: 08.09.1995 DE 19533295
(43) Veröffentlichungstag der Anmeldung: 12.03.1997
(73) Patentinhaber: TYCO Electronics Logistics AG, 9323 Steinach (CH)
(72) Erfinder: Birnbaum, Roland, Dipl.-Ing., 73433 Aalen (DE); Dissen, Günter, 82024 Taufkirchen (DE)
(74) Vertreter: Klunker . Schmitt-Nilson . Hirsch

(56) Entgegenhaltungen:
- EP-A- 0 292 024
- DE-A- 4 330 626
- US-A- 4 969 924

## Beschreibung

Die Erfindung betrifft einen hybriden Steckverbinder gemäß Oberbegriff des Anspruchs 1.

Ein derartiger hybrider Steckverbinder ist aus der US-A-4,969,924 bekannt. Der dort beschriebene Steckverbinder ist jedoch nicht modular aufgebaut, sondern die Lichtwellenleiter-Steckverbindungen sind in einer ersten Reihe und die elektrischen Steckverbindungen sind in einer zweiten Reihe eines einzigen Modulblocks angeordnet.

Aus dem deutschen Gebrauchsmuster DE 94 11 359 U1 sind außerdem bereits auf dem Markt erhältliche verriegelbare elektrische Stecksysteme mit schachtelförmig ineinander steckbaren Steckergehäusen bekannt, die insofern einen modularen Aufbau aufweisen, als das Buchsensteckergehäuse bei ihnen zur Aufnahme eines Buchsenkontakte enthaltenden Kontaktträgers dient, der an einer offenen Querseitenwand in das Buchsensteckergehäuse eingeschoben wird. Die offene Querseite wird anschließend mindestens teilweise mit einer aufschiebbaren Verschlußplatte abgeschlossen.

Die Aufgabe der Erfindung besteht in der Integration von Lichtwellenleitern einschließlich ihrer elektro-optischen Komponenten, beispielsweise Sendeund Empfängerdiode, in den zuletzt beschriebenen, modularen Steckverbinder. Die Anforderungen an ein solches Stecksystem, speziell in der Kfz-Technik, erfordern einen kompakten Aufbau mit modularen und variabel bestückbaren Elementen. Im einzelnen soll, bei geringem Kostenaufwand, ein hoher Grad an Austauschbarkeit und Servicefreundlichkeit hinsichtlich des neuen Stecksystem erreicht werden.

Diese Aufgabe wird bei einem Steckverbinder der eingangs genannten Art gelöst durch Kennzeichnungsmerkmale des Anspruchs 1.

Vorteilhafte Ausgestaltungen des Gegenstands des Anspruchs 1 sind in den Unteransprüchen angegeben.

Die Erfindung wird anhand eines in den Figuren der Zeichnung dargestellten Ausführungsbeispieles im folgenden näher beschrieben. Es zeigen:
Figur 1 einen erfindungsgemäßen Steckerverbinder in Explosionsdarstellung,
Figur 2 eine perspektivische Draufsicht auf das Buchsensteckergehäuse eines erfindungsgemäßen Steckverbinders.

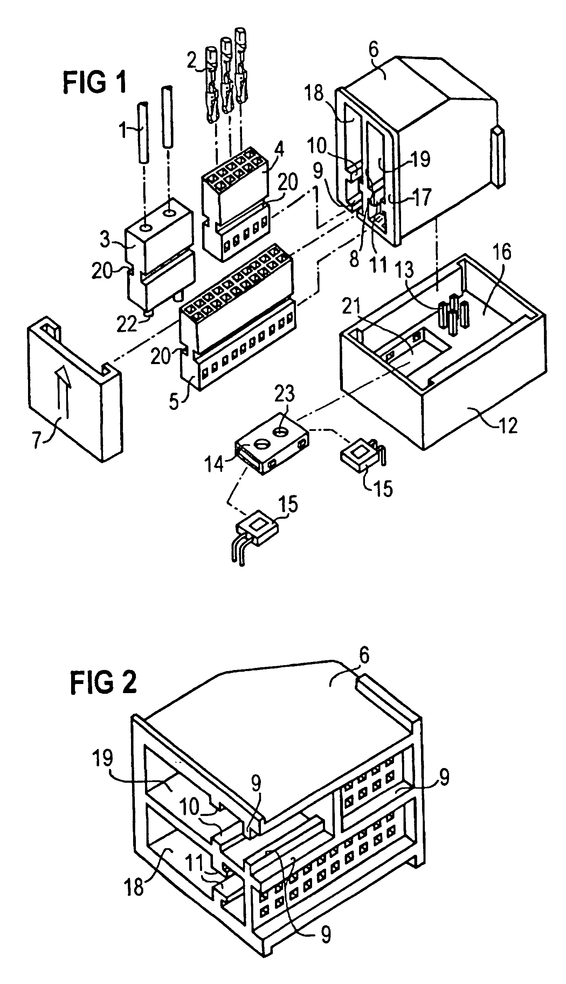

In Figur 1 ist ein Buchsensteckergehäuse 6 mit zwei zu einer Querseitenwand hin offenen Modulkammern 18 und 19 dargestellt. Die Modulkammer 19 dient als Aufnahme für das 20-polige Buchsenmodul 5, das nach der Bestückung mit Buchsenkontakten 2, an denen die zugehörigen elektrischen Kabel beispielsweise angecrimpt sind, in die Modulkammer 19 eingeschoben wird. In die linke Modulkammer 18 werden nacheinander ein 10-poliges, mit Buchsenkontakten 2 bestücktes Buchsenmodul 4 und ein Lichtleitermodul 3 eingeschoben. Die hier dargestellte Anordnung der Buchsenkontakte 2 in den Modulen 4und 5 in einem zweireihigen Raster mit dem Rastermaß 2,54 mm ist vielfach üblich, jedoch im Hinblick auf die vorliegende Erfindung nicht zwingend. Das Rastermaß und die reihen- bzw. blockförmige Kontaktanordnung in den Modulen 4 und 5 ist jedoch übereinstimmend, so daß alle in das Buchsensteckergehäuse 6 einzuschiebenden Buchsenmodule die gleichen Breitenabmessungen und die gleichen, bzw. ein Vielfaches der Längenabmessung einer kleinsten Moduleinheit aufweisen. Dementsprechend ist erfindungsgemäß auch das Lichtleitermodul 3 in seinen Außenabmessungen und in seiner konstruktiven Gestaltung hinsichtlich der Einschiebbarkeit in das Buchsensteckergehäuse 6 nach dem gleichen Modul-Bauprinzip gestaltet, so daß es mit den Buchsenmodulen 4 und 5 kombinierbar und mit dem Buchsensteckergehäuse 6 kompatibel ist.

Aufgrund der hohen Sicherheitsanforderungen, wie sie beispielsweise für Automobil-Steckverbinder gestellt werden, ist es vielfach üblich, die Buchsenkontakte 2 im Buchsengehäuse mit einer Primär- und einer unabhängig davon wirkenden Sekundärsicherung zu verriegeln. Als Primärsicherungen werden häufig pfeilartig vom Buchsenkontakt abragende Rastlanzen verwendet, die nach dem vollständigen Einschieben der Buchsenkontakte beispielsweise hinter eine Rastkante im Buchsengehäuse greifen. Auch für die Sekundärsicherung sind viele Lösungen bekannt, beispielsweise auch quer zur Steckrichtung der Buchsenkontakte wirkende Verriegelungsschieber. Die in Figur 1 dargestellten Module 3, 4 und 5 weisen erfindungsgemäß an ihren beiden Längsseiten in Einschiebrichtung verlaufende Nuten 20 auf, die beim Einschieben der Module mit an den Innenseiten der Längsseitenwände des Buchsensteckergehäuses 6angeordneten Führungsstegen 10 und 11 zusammenwirken. Die Führungsstege 10 und 11 lassen sich über die Führungsfunktion hinaus im Rahmen der vorliegenden Erfindung ohne weiteres auch so ausbilden, daß sie gleichzeitig als Verriegelungseinrichtung für die Buchsenkontakte 2 dienen. Dies ist in der Figur dadurch angedeutet, daß der Führungssteg nicht unbedingt mit quadratischem Querschnitt, vgl. Führungssteg 10 ausgebildet sein muß, sondern auch einen hinsichtlich seiner Verriegelungsfunktion optimierten Querschnitt, vgl. Führungssteg 11,aufweisen kann. Es ist vorteilhaft, für die Realisierung der Primär- und Sekundärsicherung in einem Mehrkammersystem eine Zwischenrippe 8) im Buchsensteckergehäuse 6 vorzusehen. An diesen Zwischenrippen 8, durch die die Modulkammern 8 und 19 mindestens teilweise getrennt sind, sind beidseitig Führungsstege 10 oder 11 angeordnet. Sie dienen als Sekundärsicherungen bei 2- bzw. 4-reihiger Anordnung der Kontakte. Die Zwischenrippe 8 dient vorteilhafterweise zugleich als Versteifung des Buchsensteckergehäuses 6.

Nach Einschieben der bestückten Module 3, 4 und 5 in das Buchsensteckergehäuse 6 wird dieses durch eine aufschiebbare Verschlußkappe 7 wenigstens teilweise verschlossen. Die elektrischen und Lichtleiterkabelanschlüsse können im Buchsensteckergehäuse 6 umgebogen und beispielsweise durch eine verbleibende Öffnung an der Querseitenwand 17, die, wie dargestelt einen zur Versteifung dr Verschlußkappe 7 dienenden Kragen aufweisen kann, herausgeführt werden. Der resultierende Hybrid-Steckverbinder kann somit einen links- oder rechtsseitig orientierten Kabelabgang haben.

In Figur 1 ist außerdem ein Stiftsteckergehäuse 12 dargestellt, das an seinem inneren Ende durch einen Wannenboden 16 abgeschlossen ist. Von der Vielzahl der den zu kontaktierenden Buchsenkontakten entsprechenden Steckerstiften 13 sind in Figur 1 nur vier angedeutet. Alle, auch die nicht sichtbaren Steckerstifte, sind entsprechend der Anordnung der Buchsenkontakte 2 im Buchsensteckergehäuse angeordnet. Das Buchsensteckergehäuse 6 kann, wie dargestellt, ein Innengehäuse des Steckverbinders bilden und in das Stiftsteckergehäuse 12 eingeschoben werden. Das Ineinanderfügen der beiden Gehäusehälften 6 und 12 mit möglichst geringen Steckkräften und die Verriegelung kann beispielsweise durch an sich bereits bekannte Hilfsmittel wie Zahnhebel oder Schnapphaken durchgeführt werden.

Im in Figur 1 dargestellten Stiftsteckergehäuse 12 ist außerdem eine Ausnehmung 21 im Wannenboden 16 dargestellt, in die das Lichtleitergegenmodul 14 eingesetzt werden kann. Dabei sind auch Schnapphaken am Modul 14 und passende Nuten in der Ausnehmung 21 angedeutet, die eine Möglichkeit zur gegenseitigen lösbaren Verrastung darstellen. Bekanntlich sind bei der Konstruktion von Lichtleiter-Komponenten die Genauigkeitsanforderungen im Mikrometerbereich und das Justieren insbesondere der einzelnen Fasern zueinander immer problematisch. Für die Zentrierung der Lichtwellenleiter-Steckverbindung ist es deshalb vorteilhaft, wenn das Lichtleitermodul 3 beim Stecken mit an seiner Steckseite in Verlängerung jeder Lichtleiterfaser angebrachten Zentrierhülsen 2 in entsprechende Zentrierbohrungen 23 des Lichtleitergegenmoduls 14 eingreift.

Die Sende- und Empfangsdiode 15 können vorteilhaft in seitliche Öffnungen des Lichtleitergegenmoduls 14, das in diesem Fall als Diodenträger funktioniert, eingeschoben, dort zentrisch zu den oben liegenden Bohrungen 23 ausgerichtet und danach durch Kleben oder Umspritzen der Dioden 15 fixiert werden.

In Figur 2 ist eine Ansicht des Buchsensteckergehäuses 6 im wesentlichen von der Steckseite und von der offenen Querseite her dargestellt. Das Buchsensteckergehäuse 6 kann vorteilhaft Stoßschutzmittel 9 für die Lichtleiterenden aufweisen. Wie dargestellt, können die Stoßschutzmittel 9 als Schutzkragen ausgebildet sein, wodurch sich für die vorstehenden Lichtleiterenden ein deutlich verbesserter Schutz gegenüber Beschädigungen ergibt.

Das erfindungsgemäße hybride und modulare Stecksystem weist eine sehr große Variationsvielfalt auf:

Zum einen können verschiedenpolige Buchsenmodule und auch verschieden lange Lichtleitermodule hintereinander in das Buchsensteckergehäuse eingeschoben oder in diesem nebeneinander angeordnet sein. Da das Lichtleitergegenmodul 14 grundsätzlich einfach als entsprechendes Gegenstück zum Lichtleitermodul 3 ausgebildet ist, können im Gegenmodul 4 auch vom Stiftstecker abgehende Lichtleiterfasern befestigt und zentrisch zu den im Lichtleitermodul 3 endenden Lichtleiterfasern ausgerichtet sein. Daraus ergibt sich die Möglichkeit der Realisierung eines optisch/optischen Kopplungssteckers. Das Stiftsteckergehäuse 12 kann also beispielsweise auf einer Leiterplatte befestigt sein, wobei die Steckerstifte 13 unmittelbar mit der Leiterplattenschaltung verbunden sind, während die Lichtwellenleiterkontakte mittels des Steckverbinders nur durchgeschleift werden, also nicht wie bei Ausführungen mit diodentragendem Lichtleitergegenmodul 14 unmittelbar im Steckverbinder in elektrische Signale umgewandelt werden. Das Lichtleitergegenmodul 14 kann sogar mit normalen elektrischen Steckerstiften bestückt werden, so daß ein rein elektrischer Steckverbinder resultiert. All dies ist möglich auf der Basis weiter- und wiederverwendbarer, kompatibler Steckverbinder-Komponenten. Der Kostenaufwand wird nicht nur dadurch reduziert, daß nunmehr mehrere Einzelstecker durch einen hybriden Steckverbinder ersetzt werden können, sondern auch dadurch, daß der Modul-Aufbau auch von der Fertigungsseite her einen geringeren Aufwand bedingt.

Das erfindungsgemäße Stecksystem kann ohne weiteres durch zusätzliche spezielle Ausgestaltungen ergänzt werden. Beispielsweise können Sicherungsrippen bzw. Codierungen gegen versehentlich falsches Stecken integriert werden. Durch eine entsprechende Ausgestaltung der Unterseite des Buchsenstekkergehäuses oder der Sekundärsicherung 10 bzw. 11 kann eine falsche Reihenfolge beim Einführen der Module verhindert werden. Dies führt jedoch im Regelfall zu einer Einschränkung der Variationsvielfalt. Auch eine Federung des Lichtleitermoduls zum genauen Positionieren in axialer Richtung ist denkbar. In radialer Richtung ist bei der gezeigten und beschriebenen Ausführungsform bereits ein Fangbereich in Form der im Lichtleitergegenmodul vorgesehenen Bohrung vorhanden.

## Patentansprüche

1. Hybrider Steckverbinder mit elektrischen und Lichtwellenleiter-Steckverbindungen, mit einem wannenförmigen Stiftsteckergehäuse (12) und einem Buchsensteckergehäuse (6), welche derart ausgebildet sind, daß sie mit annähernd parallel gegenüberstehenden Seitenwänden schachtelförmig ineinander steckbar sind, mit einer Modulanordnung mit Buchsenkontakten, die im Buchsensteckergehäuse angeordnet ist und wobei die Buchsenkontakte in einem bestimmten Raster angeordnet sind, und mit in der Modulanordnung befestigten Ein-Moden-Fasern, wobei im Wannenboden (16) des Stiftsteckergehäuses (12) Steckerstifte (13) angeordnet sind und im Wannenboden (16) mindestens ein integriertes Lichtleitergegenmodul (14) angebracht ist,
**dadurch gekennzeichnet,**
**daß** die Modulanordnung mindestens ein Buchsenmodul (4, 5), mit den Buchsenkontakten (2) und mindestens ein separates Lichtleitermodul (3), in welchem Ein-Moden-Fasern befestigt sind, aufweist und wobei das Buchsensteckergehäuse (6) und die Module (3, 4, 5) derart ausgestaltet sind, daß die Module (3, 4, 5) durch eine der Seitenwände (17) in das Buchsensteckergehäuse (6) einschiebbar sind und in ihren Außenabmessungen ein gleiches Teilungsmaß aufweisen.

2. Steckverbinder nach Anspruch 1,
**dadurch gekennzeichnet, daß**
das Lichtleitermodul (3) mit an seiner Steckseite in Verlängerung jeder Lichtleiterfaser angebrachten Zentrierhülsen (22) in entsprechende Zentrierbohrungen (23) des Lichtleitergegenmoduls eingreift.

3. Steckverbinder nach Anspruch 1 oder 2,
**dadurch gekennzeichnet,**
**daß** das annähernd quaderförmige Lichtleitergegenmodul (14) an seinen Stirnflächen Öffnungen aufweist, durch die elektro-optische Wandler (15) so in das Lichtleitergegenmodul (14) eingeschoben und fixiert sind, daß sie zentrisch zu den jeweiligen Lichtleiterfasern ausgerichtet sind.

4. Steckverbinder nach Anspruch 1 oder 2,
**dadurch gekennzeichnet,**
**daß** im Lichtleitergegenmodul (14) vom Stiftstecker abgehende Lichtleiterfasern befestigt und zentrisch zu den im Lichtleitermodul (3) endenden Lichtleiterfasern ausgerichtet sind.

5. Steckverbinder nach einem der Ansprüche 1 bis 4,
**dadurch gekennzeichnet,**
**daß** am Lichtleitergegenmodul (14) und am Wannenboden (16) Rastmittel zur gegenseitigen lösbaren Verrastung vorgesehen sind.

6. Steckverbinder nach einem der Ansprüche 1 bis 5,
**dadurch gekennzeichnet,**
**daß** die Module (3, 4, 5) an ihren beiden Längsseiten in Einschiebrichtung verlaufende Nuten (20) aufweisen, die beim Einschieben der Module mit an den Innenseiten der Längsseitenwände des Buchsensteckergehäuses (6) angeordneten Führungsstegen (10, 11) zusammenwirken.

7. Steckverbinder nach Anspruch 6,
**dadurch gekennzeichnet,**
**daß** das Buchsensteckergehäuse (6) mindestens zwei in Querrichtung nebeneinander angeordnete Modulkammern (18, 19) aufweist.

8. Steckverbinder nach Anspruch 7,
**dadurch gekennzeichnet,**
**daß** die einzelnen Modulkammern (18, 19) durch parallel zu den Längsseitenwänden verlaufende Zwischenrippen (8), an denen beidseitig Führungsstege (10, 11) angeordnet sind, wenigstens teilweise getrennt sind.

9. Steckverbinder nach einem der Ansprüche 6 bis 8,
**dadurch gekennzeichnet,**
**daß** die Führungsstege (10, 11) als Verriegelungseinrichtung für die Buchsenkontakte (2) ausgebildet sind.

10. Steckverbinder nach einem der Ansprüche 1 bis 9,
**dadurch gekennzeichnet,**
**daß** das Buchsensteckergehäuse (6) Stoßschutzmittel (9) für die Lichtleiterenden aufweist.

## Claims

1. A hybrid plug connector having electrical and optical fibre plug connections, having a trough-shaped pin plug housing (12) and a socket plug housing (6) which are constructed such that, by means of side walls which are opposite one another and approximately parallel, they may be pushed inside one another in the manner of boxes, having a module arrangement with socket contacts which is arranged in the socket plug housing, with the socket contacts arranged in a particular grid pattern, and having single-mode fibres secured inside the module arrangement, with plug pins (13) arranged in the trough base (16) of the pin plug housing (12) and at least one integrated optical fibre counter-module (14) mounted in the trough base (16),
**characterised in that**
the module arrangement has at least one socket module (4, 5) having the socket contacts (2) and at least one separate optical fibre module (3) in which single-mode fibres are secured, the socket plug housing (6) and the modules (3, 4, 5) being shaped such that the modules (3, 4, 5) may be pushed through one of the side walls (17) into the socket plug housing (6) and have the same module external dimensions.

2. A plug connector according to Claim 1, **characterised in that** the optical fibre module (3) engages, by means of centring tubes (22) mounted on its plugging side as an extension to each optical fibre, in corresponding centring bores (23) in the optical fibre counter-module.

3. A plug connector according to Claim 1 or 2, **characterised in that** the approximately cuboid optical fibre counter-module (14) has on its end faces openings through which electro-optical transducers (15) are pushed into the optical fibre counter-module (14) and fixed such that they are aligned centrally with respect to the individual optical fibres.

4. A plug connector according to Claim 1 or 2, **characterised in that** optical fibres leading from the pin plug are secured in the optical fibre counter-module (14) and are aligned centrally with respect to the optical fibres ending in the optical fibre module (3).

5. A plug connector according to one of Claims 1 to 4, **characterised in that** latching means are provided on the optical fibre counter-module (14) and on the trough base (16) for the purpose of mutual detachable latching.

6. A plug connector according to one of Claims 1 to 5, **characterised in that** the modules (3, 4, 5) have on their two longitudinal sides grooves (20) which run in the direction of pushing in and which, when the modules are pushed in, cooperate with guide webs (10, 11) arranged on the insides of the longitudinal side walls of the socket plug housing (6).

7. A plug connector according to Claim 6, **characterised in that** the socket plug housing (6) has at least two module chambers (18, 19) arranged next to one another in the transverse direction.

8. A plug connector according to Claim 7, **characterised in that** the individual module chambers (18, 19) are at least partly separated by intermediate ribs (8) which run parallel to the longitudinal side walls and on both sides of which guide webs (10, 11) are arranged.

9. A plug connector according to one of Claims 6 to 8, **characterised in that** the guide webs (10, 11) are constructed as a locking means for the socket contacts (2).

10. A plug connector according to one of Claims 1 to 9, **characterised in that** the socket plug housing (6) has means (9) of preventing impact against the optical fibre ends.

## Revendications

1. Connecteur hybride comportant des connexions électriques et à fibres optiques, avec un boîtier de connecteur de fiche en forme de cuve (12) et un boîtier de connecteur de prise (6), configurés de sorte à pouvoir être emboîtés en forme de boîte avec des parois latérales opposées pratiquement parallèles, un agencement de modules avec des contacts de prise, agencés dans le boîtier du connecteur de prise, les contacts de prise étant ainsi agencés dans une trame définie, avec des fibres unimodales fixées dans l'agencement de modules, des fiches de connexion (13) étant agencées dans le fond de la cuve (16) du boîtier de connecteur de fiche (12), au moins un module à fibres optiques complémentaire (14) étant agencé au fond de la cuve (16),
**caractérisé en ce que**
l'agencement de modules comporte au moins un module de prise (4, 5) comportant les contacts de prise (2), et au moins un module à fibres optiques séparé (3) dans lequel sont fixées des fibres unimodales, le boîtier du connecteur de prise (6) et les modules (3, 4, 5) étant configurés de sorte que les modules (3, 4, 5) peuvent être insérés à partir des parois latérales (17) dans le boîtier du connecteur de prise (6) et présentent un pas identique dans leurs dimensions externes.

2. Connecteur selon la revendication 1, **caractérisé en ce que** le module à fibres optiques (3) s'engage avec des douilles de centrage (22) agencées au niveau de son côté d'insertion, en prolongement de chaque fibre optique, dans des alésages de centrage correspondants (23) du module à fibres optiques complémentaire.

3. Connecteur selon les revendications 1 ou 2, **caractérisé en ce que** le module à fibres optiques complémentaire, ayant une forme pratiquement carrée (14), comporte au niveau de ses surfaces frontales des ouvertures, à travers lesquelles les transducteurs électro-optiques (15) sont insérés et fixés dans le module à fibres optiques complémentaire (14) de sorte à être orientés et centrés par rapport aux fibres optiques respectives.

4. Connecteur selon les revendications 1 ou 2, **caractérisé en ce que** des fibres optiques partant du connecteur à fiche sont fixées dans le module à fibres optiques complémentaire (14) et orientées et centrées par rapport aux fibres optiques se terminant dans le module à fibres optiques (3).

5. Connecteur selon l'une des revendications 1 à 4, **caractérisé en ce que** des moyens d'enclenchement servant à un enclenchement mutuel à dégagement sont agencés sur le module à fibres optiques complémentaire (14) et au fond de la cuve (16).

6. Connecteur selon l'une des revendications 1 à 5, **caractérisé en ce que** les modules (3, 4, 5) comportent au niveau de leurs côtés longitudinaux des rainures (20) s'étendant dans la direction d'insertion, coopérant lors de l'insertion des modules avec des barrettes de guidage (10, 11) agencées sur les côtés internes des parois latérales longitudinales du boîtier du connecteur de prise (6).

7. Connecteur selon la revendication 6, **caractérisé en ce que** le boîtier du connecteur de prise (6) comporte au moins deux chambres de modules (18, 19) juxtaposées dans la direction transversale.

8. Connecteur selon la revendication 7, **caractérisé en ce que** les différentes chambres de modules (18, 19) sont au moins partiellement séparées par des nervures intermédiaires (8) s'étendant parallèlement aux parois latérales longitudinales, sur lesquelles sont agencées des deux côtés des barrettes de guidage (10, 11).

9. Connecteur selon l'une des revendications 6 à 8, **caractérisé en ce que** les barrettes de guidage (10, 11) font fonction de dispositif de verrouillage des contacts de prise (2).

10. Connecteur selon l'une des revendications 1 à 9, **caractérisé en ce que** le boîtier du connecteur de prise (6) comporte des moyens de protection contre les chocs (9) pour les extrémités des fibres optiques.
